# EUROPÄISCHE PATENTSCHRIFT

(11) **EP 0 681 098 B1**
(45) Veröffentlichungstag und Bekanntmachung des Hinweises auf die Patenterteilung: **23.09.1998**
(21) Anmeldenummer: 94118944.1
(22) Anmeldetag: 01.12.1994
(51) Int. Cl.: F01P 7/16, G05D 23/02, G05D 23/13

(54) **Thermostatventil**
Thermostatic valve
Vanne thermostatique

(30) Priorität: 07.05.1994 DE 4416240
(43) Veröffentlichungstag der Anmeldung: 08.11.1995
(73) Patentinhaber: Gustav Wahler GmbH u. Co, D-73730 Esslingen (DE)
(72) Erfinder: Wahler, Hans, Dipl.-Ing., D-73728 Esslingen (DE)
(74) Vertreter: Kratzsch, Volkhard, Dipl.-Ing.

(56) Entgegenhaltungen:
- EP-A- 0 432 103
- FR-A- 2 332 879
- GB-A- 2 009 893
- GB-A- 2 108 663
- US-A- 2 988 068

## Beschreibung

Die Erfindung bezieht sich auf ein Thermostatventil zur Regelung der Temperatur des Kühlmittels einer Brennkraftmaschine, insbesondere eines Kraftfahrzeugmotors, der im Oberbegriff des Anspruchs 1 genannten Art.

Bei bekannten Thermostatventilen dieser Art ist die von der Rückstellfeder belastete Abstützvorrichtung in Form eines Querbügels mit unterseitigen Flächen an den Stützflächen abgestützt, die an etwa hakenartigen Enden von herabhängenden Armen des Bauteiles vorgesehen sind. Das mit dem Bauteil zusammenmontierte Thermostatventil ist in dieser Form einbaufertig und kann in z. B. einen Innenraum eines Einbaugehäuses eingesetzt und an letzterem mit dem Bauteil befestigt werden. Das Bauteil, insbesondere dessen die Stützflächen tragende, herabhängende Arme, ist vor allem im Betrieb des Thermostatventils erheblichen Beanspruchungen ausgesetzt. Das Kühlmittel, das im Betrieb das Thermostatventil beaufschlagt und passiert, hat im Betrieb eine recht hohe Temperatur und unterliegt im Betrieb starken Temperaturschwankungen, die dem Regelverlauf bei der Kühlung des Kühlmittels entsprechen. Außerdem wird z. B. beim Öffnen des Ventilverschlußgliedes die Rückstellfeder stärker zusammengedrückt, so daß sich im Bereich der die Rückstellfeder abstützenden Abstützvorrichtung erhöhte Abstützkräfte ergeben. Aus diesen Gründen muß das Bauteil insbesondere hinsichtlich der die Stützflächen tragenden, herabhängenden Arme aus einem solchen Material gebildet werden, das diesen hohen Anforderungen auch auf Dauer standhält , ohne daß die Gefahr etwaiger Beschädigungen oder Materialveränderungen besteht, z. B. Längenänderungen der herabhängenden, die Stützflächen tragenden Arme des Bauteiles vorkommen, die den Regelbetrieb des Thermostatventils nachteilig beeinflussen oder sogar völlig zunichte machen. Aus den genannten Gründen muß somit das Bauteil aus hochwertigem Material gebildet werden, z. B. aus Aluminium oder aus besonders geeignetem, hochfestem Kunststoffmaterial. Derartige Materialien sind aufwendig in der Herstellung und Verarbeitung und teuer.

Der Erfindung liegt die Aufgabe zugrunde, ein Thermostatventil der eingangs genannten Art zu schaffen, das hinsichtlich der abzustützenden Abstützvorrichtung allen im Betrieb des in ein Einbaugehäuse eingebauten Thermostatventils vorkommenden Belastungen und Beanspruchungen standhält und ein aus kostengünstigem und weniger hochwertigem Material bestehendes Bauteil aufweisen kann, unter insgesamt erreichbarer Vereinfachung und Verbilligung des Thermostatventils.

Die Aufgabe ist bei einem Thermostatventil der eingangs genannten Art gemäß der Erfindung durch die Merkmale im Kennzeichnungsteil des Anspruchs 1 gelöst. Dadurch ist erreicht, daß bei in das Einbaugehäuse eingebautem Thermostatventil die im Betrieb auftretenden Belastungen und Kräfte unmittelbar oder mittelbar vom Einbaugehäuse selbst abgestützt und aufgenommen werden und somit das Bauteil in diesem eingebauten Stadium des Thermostatventils von diesen Belastungen entlastet ist. Die die Stützflächen des Bauteiles zur Abstützung der Abstützvorrichtung tragenden Teile des Bauteils werden nur noch in dem Zustand mit Abstützkräften belastet, in dem das Thermostatventil mit dem Bauteil zusammen als einbaufertige Einheit montiert, jedoch noch nicht in das Einbaugehäuse eingebaut und an diesem befestigt ist. In diesem noch nicht eingebauten Zustand wird das Thermostatventil noch nicht mit den erst im Betrieb auftretenden Temperaturbelastungen und Kräftebelastungen beaufschlagt, sondern nur mit einer relativ geringen Rückstellkraft der Rückstellfeder, die ausreicht, den zusammengebauten Zustand des Thermostatventils mit dem Bauteil aufrechtzuerhalten. Sobald diese einbaufertige Einheit in das Einbaugehäuse eingesetzt und daran befestigt wird, werden die die Stützflächen zur Abstützung der Abstützvorrichtung tragenden Teile des Bauteiles entlastet, wobei die Abstützvorrichtung statt dessen dann direkt oder indirekt am Einbaugehäuse abgestützt ist. Dadurch ist der Vorteil erreicht, daß das Bauteil aus nicht hochwertigem und hochfestem Material sondern aus kostengünstigem und relativ einfachem Material, insbesondere Kunststoffmaterial, gebildet werden kann. Dies führt zu einer Vereinfachung und Kostenreduzierung des Thermostatventils, wobei diese Kostenreduzierung sich vor allem dann erheblich auswirkt, wenn das Bauteil relativ großvolumig und so gestaltet ist, daß sehr viel Materialaufwand dafür notwendig ist.

Weitere vorteilhafte Erfindungsmerkmale und Ausgestaltungen ergeben sich aus den Ansprüchen 2 bis 26.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen.

Die Erfindung ist nachfolgend anhand von in den Zeichnungen gezeigten Ausführungsbeispielen näher erläutert. Es zeigen:
- Fig. 1: einen schematischen Schnitt mit teilweiser Seitenansicht eines Thermostatventils gemäß einem ersten Ausführungsbeispiel, eingesetzt in ein Einbaugehäuse, mit in die Schnittebene gedrehtem Stützteil der Abstützvorrichtung,
- Fig. 2: eine schematische Draufsicht der Abstützvorrichtung des Thermostatventils in Fig. 1,
- Fig. 3, 4 und 5: jeweils einen schematischen Schnitt mit teilweiser Seitenansicht eines Thermostatventils gemäß einem zweiten bzw. dritten bzw. vierten Ausführungsbeispiel, jeweils eingebaut in ein Einbaugehäuse.

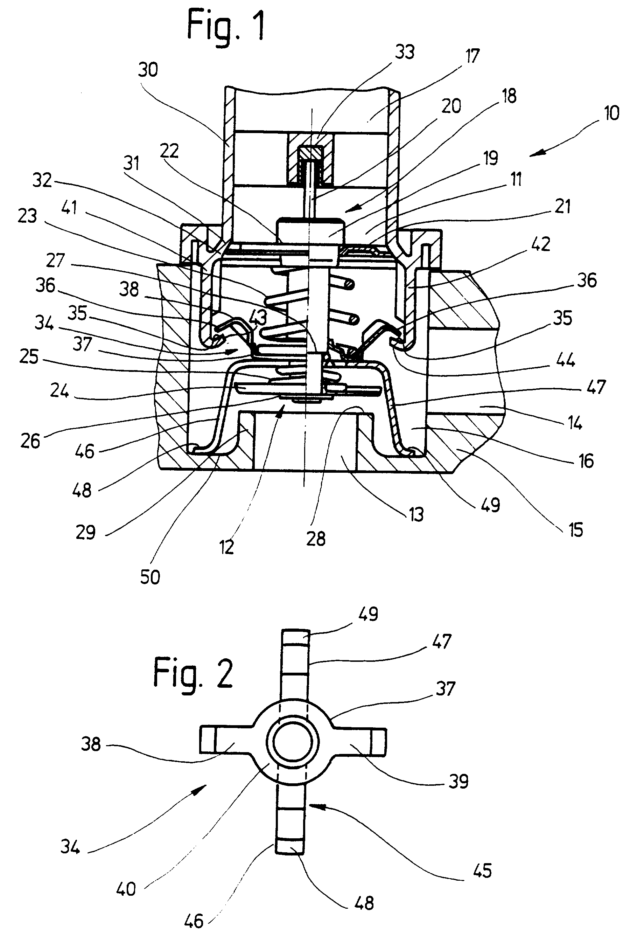

In Fig. 1 und 2 ist ein erstes Ausführungsbeispiel eines Thermostatventils 10 gezeigt, das zur Regelung der Temperatur des Kühlmittels einer Brennkraftmaschine, insbesondere eines Kraftfahrzeugmotors, dient. Das Thermostatventil 10 hat beim gezeigten ersten Ausführungsbeispiel ein Kühlerventil 11 und ein Bypaßventil 12. Das Thermostatventil 10 regelt den Kühlmittelfluß von der Brennkraftmaschine durch einen Bypaß 13 und/oder durch einen nicht gezeigten Wärmeaustauscher, insbesondere Kühler, zurück zur Brennkraftmaschine. Bei geschlossenem Kühlerventil 11 gemäß Fig. 1 gelangt das Kühlmittel über eine Öffnung 14 in einem das Thermostatventil 10 enthaltenden Einbaugehäuse 15 in dessen Innenraum 16, den es aufgrund des geöffneten Bypaßventiles 12 durch den Bypaß 13 verläßt. Ist hingegen das Kühlerventil 11 geöffnet, gelangt Kühlmittel aus dem Innenraum 16 durch den Kanal 17 zu einem nicht gezeigten Wärmeaustauscher.

Das Thermostatventil 10 weist ein temperaturabhängig arbeitendes Betätigungselement 18 auf, das in einem Gehäuse 19 einen Dehnstoff enthält, der sich bei Erwärmung ausdehnt und einen koaxialen Kolben 20 relativ zum Gehäuse 19 verschiebt. Auf dem Gehäuse 19 ist ein Ventilverschlußglied 21 des Kühlerventils 11 in Form eines Ventiltellers gehalten, das an einem Ringbund 22 des Gehäuses 19 axial anliegt und bei Erwärmung vom Gehäuse 19 in Fig. 1 nach unten gegen die Wirkung einer Rückstellfeder 23 bewegt wird.

Auf dem Gehäuse 19 ist ferner am in Fig. 1 unteren Endbereich ein zweites Ventilverschlußglied 24 axial verschiebbar gehalten, das ebenfalls als Ventilteller ausgebildet ist und Teil des Bypaßventils 12 ist. Das Ventilverschlußglied 24 ist mittels einer Feder 25 gegen einen unteren Anschlag 26 am Gehäuse 19 gedrückt und relativ zum Gehäuse 19 axial verschiebbar. Die Feder 25 ist mit ihrem oberen Ende an einem Ringbund 27 des Gehäuses 19 axial abgestützt. Dem Ventilverschlußglied 24 ist eine stirnseitige Ventilsitzfläche 28 zugeordnet, die unterhalb des Ventilverschlußgliedes 24 verläuft und hier durch die obere Stirnfläche eines koaxialen zylindrischen Teils 29 gebildet ist, der einstückiger Teil des Einbaugehäuses 15 ist.

Am Einbaugehäuse 15 ist ein etwa rohrförmiges Bauteil 30 lösbar, jedoch fest, angebracht, das den dem Ventilverschlußglied 21 des Kühlerventils 11 zugeordneten Ventilsitz 31 in Form einer etwa kegelstumpfförmigen inneren Fläche 32 enthält. Das Bauteil 30 besteht mit Vorzug aus Kunststoffmaterial, wobei es sich hier nicht um einen besonders hochwertigen Kunststoff handeln muß, der sonst sehr kostenaufwendig ist. Das Bauteil 30 enthält im Inneren den Kanal 17 und ferner ein an Querstegen sitzendes Widerlager 33, an dem der Kolben 20 mit seinem oberen Ende axial abgestützt ist.

Die dem Ventilverschlußglied 21 und Gehäuse 19 zugeordnete Rückstellfeder 23 ist mit dem in Fig. 1 oberen Ende am Ventilverschlußglied 21 und mit ihrem in Fig. 1 unteren Ende an einer besonderen Abstützvorrichtung 34 axial abgestützt. Das Bauteil 30 weist von dem Ventilsitz 31 nach unten abgehende und sich in den Innenraum 16 hinein erstreckende Teile mit Stützflächen 35 daran auf, die generell der Abstützung der Abstützvorrichtung 34 in dem Stadium dienen, in dem das Thermostatventil 10 noch nicht in das Einbaugehäuse 15 fest eingebaut ist, sondern als einbaufertige Einheit mit dem Bauteil 30 zusammen montiert ist. Dieser Zustand ist nicht in Fig. 1 gezeigt. In diesem einbaufertigen, jedoch noch nicht eingebautem Zustand des Thermostatventils 10 wird die Abstützvorrichtung 34 durch die Rückstellfeder 23 nach unten gegen die oberseitigen Stützflächen 35 am Bauteil 30 gedrückt. Dadurch wird das Thermostatventil 10 als einbaufertige Einheit zusammengehalten. In diesem noch nicht eingebautem Zustand liegt die Abstützvorrichtung 34 mit Flächen 36, die den Stützflächen 35 zugeordnet sind, von oben her an den Stützflächen 35 an.

Im in Fig. 1 gezeigten eingebauten Zustand des Thermostatventils 10 hingegen, in dem das Bauteil 30 am Einbaugehäuse 15 befestigt ist, z.B. angeschraubt ist, sind die Stützflächen 35 des Bauteils 30 von der Abstützvorrichtung 34 entlastet. Die Stützflächen 35 befinden sich somit in Abstand unterhalb der Flächen 36 der Abstützvorrichtung 34. Die Abstützvorrichtung 34 ist in diesem eingebautem Zustand statt dessen am Einbaugehäuse 15 abgestützt. Dies wird später noch im Detail erläutert.

Die Abstützvorrichtung 34 weist ein auf dem Gehäuse 19 verschiebbares Abstützglied 37 auf, das mit Endteilen 38, 39 und daran vorgesehenen unterseitigen Flächen 36 an den zugeordneten Stützflächen 35 des Bauteils 30 abstützbar ist und im gezeigten eingebauten Zustand des Thermostatventils 10 von diesen Stützflächen 35 abhebbar ist.

Das Abstützglied 37, das relativ zum Gehäuse 19 axial verschiebbar ist, weist auf einer, in Fig. 1 nach oben weisenden Seite eine Anlagefläche 40, vorzugsweise mit Zentrierung, für das zugeordnete Ende der Rückstellfeder 23 auf. Auf der der Rückstellfeder 23 abgewandten Seite der Endteile 38, 39 befindet sich die jeweilige, der Stützfläche 35 zugeordnete Fläche 36, die in Fig. 2 unterhalb der Zeichenebene verläuft.

Das Bauteil 30 hat als Träger der Stützflächen 35 zumindest zwei abstehende, zum Betätigungselement 18 etwa parallele Schenkel 41, 42, die am Ende nach innen gerichtete Vorsprünge 43 bzw. 44 tragen, an deren nach oben weisender Seite die jeweilige Stützfläche 35 vorgesehen ist.

Das Abstützglied 37 der Abstützvorrichtung 34, das in Fig. 2 dargestellt ist, ist etwa brückenartig ausgebildet und weist als Endteile 38, 39 zwei voneinander weg strebende Arme auf, die entsprechend Fig. 1 etwa hakenförmig gebogen sein können und mit ihrem Ende und den unterseitig daran vorgesehenen Flächen 36 an den Stützflächen 35 des Bauteils 30 abstützbar sind bzw. davon abhebbar sind. Die Abhebung geschieht beim Einbau des Thermostatventils 10 mit Befestigung des Bauteils 30 dadurch, daß die Abstützvorrichtung 34 am Einbaugehäuse 15 abgestützt wird und sich dadurch relativ zum Gehäuse 19 und Bauteil 30 verschiebt.

Beim ersten Ausführungsbeispiel in Fig. 1 und 2 weist die Abstützvorrichtung 34 für diese Abstützung am Einbaugehäuse 15 im eingebauten Zustand des Thermostatventils 10 einen besonderen Stützteil 45 auf. Dieser ist beim ersten Ausführungsbeispiel unterhalb des Abstützgliedes 37 auf dem Gehäuse 19 des Betätigungselements 18 angeordnet und am Abstützglied 37 axial abgestützt. Beim gezeigten Ausführungsbeispiel ist der besondere Stützteil 45 mit dem Abstützglied 37 fest verbunden, so daß der Stützteil 45 bei noch nicht eingebautem Thermostatventil 10 nicht nach unten herabrutscht und ohne Zentrierung ist.

Bei einem anderen, nicht gezeigten Ausführungsbeispiel ist der Stützteil 45 einstückiger Bestandteil des Abstützgliedes 37, so daß beide einstückige Teile der Abstützvorrichtung 34 sind. Dies ist in einfacher Weise durch eine z.B. etwa sternförmige Ausbildung zu verwirklichen, die einerseits das Abstützglied 37 mit den beiden armförmigen Endteilen 38, 39 und andererseits den Stützteil 45 mit z.B. ebenfalls zwei abstrebenden Armen 46, 47 aufweist. Beim gezeigten ersten Ausführungsbeispiel hat der besondere Stützteil 45 zwei Stützglieder in Form der Arme 46, 47, wobei diese Stützglieder 46, 47 in dem Gehäuse 19 des Betätigungselements 18 abgewandter Richtung vom Stützteil 45 weg ragen ähnlich Stützbeinen und mit ihren Enden 48, 49 am Boden 50 des Einbaugehäuses 15 axial abstützbar sind. Zur besseren Verdeutlichung sind in Fig. 1 diese beiden Stützglieder 46, 47 in Form der Arme innerhalb der gleichen Ebene dargestellt wie die beiden Endteile 38, 39 des Abstützgliedes 37. In Fig. 2 dagegen sind die beiden Stützglieder 46, 47 des Stützteils 45 so dargestellt, wie zweckmäßigerweise die praktische Ausführung ist. Hierbei verläuft das jeweilige Stützglied 46, 47 etwa unter einem Winkel von 90° in Bezug auf den jeweiligen Endteil 38, 39 des Abstützgliedes 37. Wie Fig. 1 zeigt, streben dabei die armförmigen Stützglieder 46, 47 des Stützteils 45 nach unten ab. Ihre Abmessung, insbesondere das Axialmaß, bestimmt beim Einbau des Thermostatventils 10 in das Einbaugehäuse 15 das Maß, um das die Abstützvorrichtung 34 mit den Flächen 36 nach oben von den Stützflächen 35 des Bauteils 30 abhebt.

Dadurch, daß im eingebautem Zustand des Thermostatventils 10 das Bauteil 30 von der Abstützvorrichtung 34 entlastet ist und die Abstützvorrichtung 34 statt dessen am Einbaugehäuse 15 abgestützt ist, werden die im Betrieb des Thermostatventils 10 sich ergebenden Kräfte und Belastungen von der Abstützvorrichtung 34 und dem Einbaugehäuse 15 aufgenommen und das Bauteil 30 von diesen Beanspruchungen entlastet. Dadurch ist es möglich, für das Bauteil 30, und zwar auch hinsichtlich der Schenkel 41, 42 mit Stützflächen 35 daran, ein solches kostengünstiges und auch ansonsten vorteilhaftes Material zu wählen, das deswegen einfacher und kostengünstiger sein kann, weil es nicht die im Betrieb entstehenden Kräfte und Belastungen aufnehmen muß. Im Betrieb entstehen z.B. beim Öffnungshub des Ventilverschlußgliedes 21 größere Kräfte, da hierbei die Rückstellfeder 23 weiter zusammengedrückt wird. Diese Kräfte werden von der Abstützvorrichtung 34 aufgenommen und über den Stützteil 45 mit dessen Stützgliedern 46, 47 auf das Einbaugehäuse 15 weitergeleitet, das diese Belastungen ohne Probleme aufnehmen kann, da es sich beim Einbaugehäuse 15 in der Regel um ein metallisches Gehäuse, z.B. aus Aluminiumdruckguß, handelt.

Aufgrund der besonderen Gestaltung der Abstützvorrichtung 34 und Abstützung dieser am Einbaugehäuse 15 bei eingebautem Thermostatventil 10 haben die Schenkel 41, 42 des Bauteils 30 nur noch die Aufgabe, vor dem Einbau die montagefertige Einbaueinheit zusammenzuhalten und hierbei unter der Kraft der Rückstellfeder 23 ein Widerlager für das Abstützglied 37 mit den beiden Endteilen 38, 39 zu bilden, wobei aufgrund der festen Verbindung damit auch der Stützteil 45 gehalten ist. Der Stützteil 45 ist mit dem Abstützglied 37 z. B. formschlüssig über eine Bördelverbindung, Klemmverbindung, Rastverbindung od. dgl. oder statt dessen durch Punktschweißung, Kleben oder in sonstiger Weise verbunden. Dadurch ist verhindert, daß vor dem Einbau des Thermostatventils 10 der Stützteil 45 sich vom Abstützglied 37 löst und lose herabhängt, wobei das Ventilverschlußglied 24 zwar eine Verliersicherung bildet, jedoch der Stützteil 45 dabei keine Zentrierung in Bezug auf das Gehäuse 19 hätte.

Es versteht sich, daß die Abstützvorrichtung 34 nicht zwingend sternförmig, wie in Fig. 2 gezeigt, ausgebildet sein muß. Bei einem anderen, nicht gezeigten Ausführungsbeispiel können die beiden Stützglieder 46, 47 des Stützteils 45 auch etwa innerhalb der gleichen Ebene verlaufen wie die beiden Endteile 38, 49 des Abstützgliedes 37, so daß sich die Abstützvorrichtung 34 dann etwa so darstellt, wie in Fig. 1 gezeigt ist. Auch ein anderer Umfangswinkelabstand als der in Fig. 2 gezeigte zwischen den Stützgliedern 46, 47 und den Endteilen 38, 39 liegt im Rahmen der Erfindung, ebenso mehr als zwei Endteile 38, 39 und/oder Stützglieder 46,47.

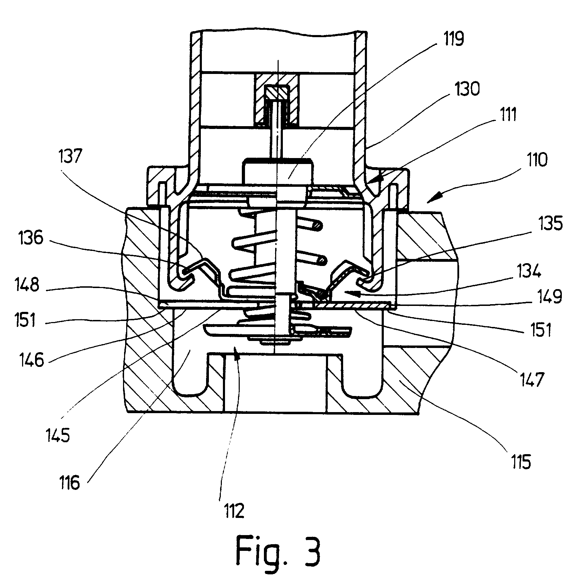

Bei dem in Fig. 3 gezeigten zweiten Ausführungsbeispiel sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles Bezug genommen ist.

Das zweite Ausführungsbeispiel in Fig. 3 unterscheidet sich vom ersten Ausführungsbeispiel allein dadurch, daß der besondere Stützteil 145 der Abstützvorrichtung 134 einen oder mehrere, in einer gemeinsamen, etwa horizontalen Ebene verlaufende Stützglieder 146, 147 aufweist, die mit ihrem äußeren Ende 148, 149 an irgendeinem geeigneten Vorsprung 151 des Einbaugehäuses 115 axial abstützbar sind. Der Vorsprung 151 kann z. B. aus einer Ringschulter im Innenraum 116 gebildet sein, die radial nach innen vorspringt und beim Einsetzen des Bauteils 130 mit Thermostatventil 110 eine Stützfläche für die Enden 148, 149 des Stützteils 145 bildet.

Bei einem anderen, nicht gezeigten Ausführungsbeispiel, bei dem der Stützteil 145 ein einziges Stützglied aufweist, ist dieses Stützglied z. B. als ebene Scheibe ausgebildet, die ebenso wie die beiden Stützglieder 146, 147 somit in einer Diametralebene verläuft. Im Fall einer Scheibe enthält diese für den Durchlaß des Kühlmittels Durchbrüche.

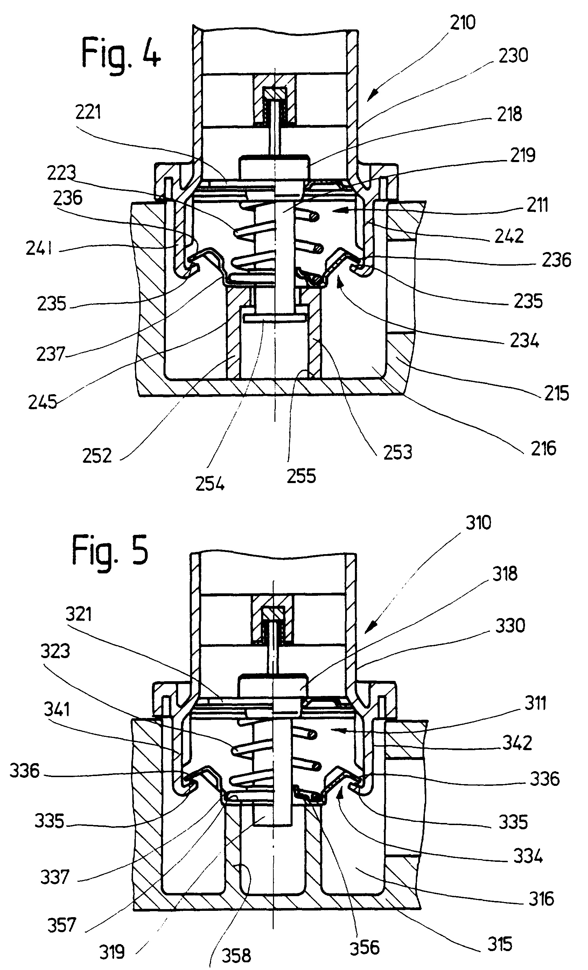

Bei dem in Fig. 4 gezeigten dritten Ausführungsbeispiel sind aus den vorgenannten Gründen für die Teile, die dem ersten bzw. zweiten Ausführungsbeispiel entsprechen, um 200 größere Bezugszeichen verwendet.

Beim dritten Ausführungsbeispiel trägt das thermostatische Betätigungselement 218 lediglich das dem Kühlerventil 211 zugeordnete eine Ventilverschlußglied 221. Das Bypaßventil 12 bzw. 112 des ersten bzw. zweiten Ausführungsbeispiels ist hier entfallen. Das Bauteil 230 ist genauso gestaltet wie beim ersten bzw. zweiten Ausführungsbeispiel. Es weist wie letztere an den beiden in den Innenraum 216 hineinragenden Schenkeln 241, 242 oberseitige Stützflächen 235 auf. Die Abstützvorrichtung 234 ist in gleicher Weise wie beim ersten und zweiten Ausführungsbeispiel mit einem Abstützglied 237 auf dem Gehäuse 219 versehen, das der Abstützung des unteren Endes der Rückstellfeder 223 dient und den Stützflächen 235 zugeordnete Flächen 236 aufweist. Ist das Thermostatventil 210 mit dem Bauteil 230 zusammengebaut, jedoch noch nicht in das Einbaugehäuse 215 eingesetzt, drückt die Rückstellfeder 223 das Abstützglied 237 mit den Flächen 236 gegen die Stützflächen 235, so daß die Schenkel 241, 242 des Bauteils 230 zur axialen Abstützung und zum Zusammenhalt des montierten Thermostatventils 10 dienen.

Abweichend vom ersten und zweiten Ausführungsbeispiel ist beim dritten Ausführungsbeispiel in Fig. 1 der besondere, unterhalb des Abstützgliedes 237 angeordnete Stützteil 245 als eigenständiges Bauteil ausgebildet. Dieser besondere Stützteil 245 besteht aus einem Stützglied 252, das z. B. als etwa zylindrische Hülse 253 mit Durchbrüchen in der Hülsenwandung ausgebildet ist. Diese Durchbrüche sind in Fig. 4 nicht gezeigt, weil der diametrale Schnitt durch keine Durchbrüche enthaltende Wandungsbereiche der Hülse 253 geht. Die in der Wandung der Hülse 253 enthaltenen Durchbrüche sind z. B. zum unteren Ende der Hülse 253 offen, so daß sich die Hülse 253 etwa wie eine umgestülpte Krone darstellt. Statt dessen kann das Stützglied 252 auch lediglich z. B. zwei oder mehrere nach unten abgehende Arme aufweisen. Das Stützglied 252 ist am unteren Ende des Gehäuses 219 verliersicher gehalten, z. B. mittels eines Vorsprunges 254, der z. B. aus einer Ringwulst, einer Endplatte od. dgl. gebildet ist. Das eigenständige Stützglied 252 ist, abweichend von den vorangehenden Ausführungsbeispielen, somit nicht mit dem Abstützglied 237 verbunden sondern demgegenüber eigenständig und mittels des Vorsprungs 254 gegen Herabfallen vom Gehäuse 219 gesichert.

Ist das Thermostatventil 210 entsprechend Fig. 4 in das Einbaugehäuse 215 eingebaut, so dienen der Abstützung des Abstützgliedes 237 das Stützglied 252 und unmittelbar eine bodenseitige Fläche 255 des Einbaugehäuses 215. Die Rückstellfeder 223 drückt im Einbauzustand somit auf das Abstützglied 237, das unterseitig vom Stützglied 252 abgestützt ist und die Abstützkräfte an die bodenseitige Fläche 255 des Einbaugehäuses 215 weiterleitet. Das Bauteil 230 ist somit im Bereich der Stützflächen 235 von der Abstützvorrichtung 234 entlastet und letztere über das Stützglied 252 direkt am Einbaugehäuse 215 abgestützt.

Das in Fig. 5 gezeigte vierte Ausführungsbeispiel ist ähnlich demjenigen in Fig. 4 und zeigt wie dort ein Thermostatventil 310, das allein das Kühlerventil 311 aufweist, jedoch kein zusätzliches Bypaßventil.

Die Abstützvorrichtung 334 ist in Fig. 5 im dort gezeigten eingebauten Zustand des Thermostatventils 310 mit am Abstützglied 337 selbst vorgesehenen Flächen 356 an zugeordneten stirnseitigen Flächen 357 des Einbaugehäuses 315 selbst abgestützt. Das Einbaugehäuse 315 weist hierzu ein z. B. etwa hülsenförmiges, damit einstückiges Abstützglied 358 auf, das in seiner Wandung nicht gezeigte Durchbrüche enthält, die in Fig. 5 nach oben hin und zur Fläche 357 offen sein können. Das Abstützglied 358 kann statt dessen auch aus z. B. zwei oder mehreren einzelnen stiftartigen Stegen bestehen, die als mit dem Einbaugehäuse 315 einstückige Elemente in Fig. 5 nach oben ragen. Ein derartiges Abstützglied 358 gemäß Fig. 5 ist somit Teil des Einbaugehäuses 315. Bei einem anderen, nicht gezeigten Ausführungsbeispiel ist dieses Abstützglied 358 nicht einstückig mit dem Einbaugehäuse 315, sondern statt dessen als Zusatzteil ausgebildet, das beim Einbau des Thermostatventils 310 in das Einbaugehäuse 315 eingebracht wird. Bei einem anderen, nicht gezeigten Ausführungsbeispiel ist ein derartiges, als Zusatzteil in das Einbaugehäuse 315 eingebrachtes Abstützglied anders beschaffen,z. B. als etwa hutförmiges Element mit innerem Durchbruch, der entsprechend Fig. 4 und 5 das Hindurchtauchen des Betätigungselements 218 bzw. 318 gestattet und mit seiner Oberseite die axiale Abstützung des Abstützgliedes 237 bzw. 337 vornimmt und fußseitig z. B. am Boden des Einbaugehäuses 215 bzw. 315 abgestützt ist. Ein solches etwa hutförmiges Element kann auch einzelne, etwa spinnenförmige, abstrebende und am Boden des Einbaugehäuses 215 bzw. 315 abgestützte Arme haben.

Bei einem anderen, nicht gezeigten Ausführungsbeispiel ist als besonderes, zwischen die Abstützvorrichtung 234, 334 einerseits und den Boden des Einbaugehäuses 215, 315 andererseits eingesetztes Zusatzteil eine solche Zylinderhülse vorgesehen, in deren Wandung Durchbrüche enthalten sind und deren Durchmesser größer als derjenige des Stützgliedes 252 bzw. des Abstützgliedes 358 und so groß gewählt ist, daß diese Zylinderhülse im Knick der etwa hakenförmig abknickenden Endteile des Abstützgliedes 237 bzw. 337 verläuft und nach Befestigen des Bauteils 230 bzw. 330 dort eine Abstützung des Abstützgliedes 237 bzw. 337 bewirkt.

## Patentansprüche

1. Thermostatventil zur Regelung der Temperatur des Kühlmittels einer Brennkraftmaschine, insbesondere eines Kraftfahrzeugmotors, das den Kühlmittelfluß von der Brennkraftmaschine durch einen Bypaß und/oder durch einen Wärmeaustauscher, insbesondere Kühler, zurück zur Brennkraftmaschine regelt, mit einem temperaturabhängig arbeitenden Betätigungselement (18), dessen Gehäuse (19) mindestens ein Ventilverschlußglied (21) trägt und bei Erwärmung den Hub des Ventilverschlußgliedes (21) gegen eine Rückstellfeder (23) bewirkt, die in Öffnungsrichtung des Ventilverschlußgliedes (21) mit einem Ende an einer Abstützvorrichtung (34) abgestützt ist, wobei der dem Ventilverschlußglied (21) zugeordnete Ventilsitz (31) an einem Bauteil (30) ausgebildet ist, das der Abstützvorrichtung (34) zugeordnete Stützflächen (35) aufweist,
**dadurch gekennnzeichnet**,
daß die Abstützvorrichtung (34; 134; 234; 334) vor dem Einbau des Thermostatventils in ein Einbaugehäuse (15; 115; 215; 315) mit den Stützflächen (35; 135; 235; 335) des Bauteils (30; 130; 230; 330) zugeordneten Flächen (36; 136; 236; 336) an den Stützflächen (35; 135; 235; 335) anliegt und daß im in das Einbaugehäuse (15; 115; 215; 315) eingebauten Zustand des Thermostatventils die Stützflächen (35; 135; 235; 335) des Bauteils (30; 130; 230; 330) von der Abstützvorrichtung (34; 134; 234; 334) entlastet sind und die Abstützvorrichtung (34; 134; 234; 334) am Einbaugehäuse (15; 115; 215; 315) abgestützt ist.

2. Thermostatventil nach Anspruch 1,
**dadurch gekennzeichnet**,
daß die Abstützvorrichtung (34; 134; 234; 334) ein Abstützglied (37; 137; 237; 337) auf dem Gehäuse (19; 119; 219; 319) des Betätigungselements (18; 218; 318) aufweist, das mit Endteilen (38, 39) an den Stützflächen (35; 135; 235; 335) des Bauteils (30; 130; 230; 330) abstützbar und im eingebauten Zustand des Thermostatventils von den Stützflächen (35; 135; 235; 335) abhebbar ist.

3. Thermostatventil nach Anspruch 2,
**dadurch gekennzeichnet**,
daß das Abstützglied (37; 137; 237; 337) relativ zum Gehäuse (19; 119; 219; 319) des Betätigungselements (18;218; 318) verschiebbar ist und auf einer Seite eine Anlagefläche (40) für das zugeordnete Ende der Rückstellfeder (23; 223; 323) aufweist und auf der der Rückstellfeder (23; 223; 323) abgewandten Seite der Endteile (38, 39) die den Stützflächen (35; 135; 235; 335) zugeordneten Flächen (36; 136; 236; 336) aufweist und im eingebauten Zustand gegen die Wirkung der Rückstellfeder (23; 223; 323) von den Stützflächen (35; 135; 235; 335) abhebbar ist.

4. Thermostatventil nach einem der Ansprüche 1 bis 3,
**dadurch gekennzeichnet,**
daß das Bauteil (30; 130; 230; 330) zumindest zwei abstehende, zum Betätigungselement (18; 218; 318) etwa parallele Schenkel (41, 42; 241, 242; 341, 342) aufweist, die die Stützflächen (35; 135; 235; 335) tragen.

5. Thermostatventil nach Anspruch 4,
**dadurch gekennzeichnet,**
daß die Schenkel (41, 42; 241, 242; 341, 342) am Ende nach innen gerichtete Vorsprünge (43, 44) tragen, an deren nach oben weisender Seite die Stützflächen (35; 135; 235; 335) vorgesehen sind.

6. Thermostatventil nach einem der Ansprüche 1 bis 5,
**dadurch gekennzeichnet,**
daß das Bauteil (30; 130; 230; 330) aus Kunststoff gebildet ist.

7. Thermostatventil nach einem der Ansprüche 1 bis 6,
**dadurch gekennzeichnet,**
daß das Abstützglied (37; 137; 237; 337) etwa brückenartig ausgebildet ist.

8. Thermostatventil nach einem der Ansprüche 1 bis 7,
**dadurch gekennzeichnet,**
daß das Abstützglied (37; 137; 237; 337) zumindest zwei voneinander weg weisende Arme aufweist, die mit ihrem Ende an den Stützflächen (35; 135; 235; 335) des Bauteils (30; 130; 230; 330) abstützbar bzw. davon abhebbar sind.

9. Thermostatventil nach einem der Ansprüche 1 bis 8,
**dadurch gekennzeichnet**,
daß die Abstützvorrichtung (334) im eingebauten Zustand des Thermostatventils mit am Abstützglied (337) selbst vorgesehenen Flächen (356) an Flächen (357) oder mindestens einem Abstützglied (358) des Einbaugehäuses (315) abgestützt ist.

10. Thermostatventil nach einem der Ansprüche 1 bis 8,
**dadurch gekennzeichnet**,
daß die Abstützvorrichtung (34; 134; 234) im eingebauten Zustand des Thermostatventils mit einem besonderen Stützteil (45; 145; 245; 358) am Einbaugehäuse (15; 115; 215) abgestützt ist.

11. Thermostatventil nach Anspruch 10,
**dadurch gekennzeichnet,**
daß der besondere Stützteil (45; 145; 245) unterhalb des Abstützgliedes (37; 137; 237) auf dem Gehäuse (19; 119; 219) des Betätigungselements (18; 218) angeordnet ist.

12. Thermostatventil nach Anspruch 10 oder 11,
**dadurch gekennzeichnet,**
daß der besondere Stützteil (45; 145) der Abstützvorrichtung (34; 134) mit deren Abstützglied (37; 137) verbunden oder damit einstückig ist.

13. Thermostatventil nach einem der Ansprüche 10 bis 12,
**dadurch gekennzeichnet**,
daß der besondere Stützteil (245) als eigenständiges Bauteil ausgebildet ist.

14. Thermostatventil nach Anspruch 13,
**dadurch gekennzeichnet,**
daß der besondere Stützteil (245) verliersicher, z. B. mittels mindestens eines Vorsprunges (254), einer Ringwulst od. dgl., am Gehäuse (219) des Betätigungselements (218) gehalten ist.

15. Thermostatventil nach einem der Ansprüche 10 bis 14,
**dadurch gekennzeichnet,**
daß der besondere Stützteil (45; 245) ein oder mehrere Stützglieder (46, 47; 252) aufweist, die in dem Gehäuse (19; 219) des Betätigungselements (18; 218) abgewandter Richtung vom Stützteil (45; 245) weg ragen und endseitig am Einbaugehäuse (15; 215) axial abstützbar sind.

16. Thermostatventil nach Anspruch 15,
**dadurch gekennzeichnet,**
daß die Stützglieder (46, 47; 252) aus nach unten abstrebenden Armen gebildet sind.

17. Thermostatventil nach Anspruch 15 oder 16,
**dadurch gekennzeichnet,**
daß das mindestens eine Stützglied (252) als etwa zylindrische Hülse (253) ausgebildet ist.

18. Thermostatventil nach Anspruch 17,
**dadurch gekennzeichnet,**
daß die Hülse (253) in ihrer Wandung Durchbrüche enthält, vorzugsweise solche, die zumindest zu einer Axialseite offen sind.

19. Thermostatventil nach einem der Ansprüche 10 bis 15,
**dadurch gekennzeichnet,**
daß der besondere Stützteil (145) ein oder mehrere, in einer gemeinsamen, etwa horizontalen Ebene verlaufende Stützglieder (146, 147) aufweist, die mit ihrem äußeren Ende (148, 149) an mindestens einem Vorsprung (151), z.B. einer Ringschulter, einem Absatz od. dgl., des Einbaugehäuses (115) abstützbar sind.

20. Thermostatventil nach Anspruch 19,
**dadurch gekennzeichnet,**
daß das mindestens eine Stützglied (146) als ebene Scheibe ausgebildet ist.

21. Thermostatventil nach Anspruch 20,
**dadurch gekennzeichnet,**
daß die Scheibe Durchbrüche enthält.

22. Thermostatventil nach Anspruch 10,
**dadurch gekennzeichnet,**
daß der besondere Stützteil der Abstützvorrichtung (334) als Teil (Abstützglied 358) des Einbaugehäuses (315) oder als Zusatzteil ausgebildet ist, der am Einbaugehäuse (315) anbringbar ist und Flächen (357) für die am Einbaugehäuse (315) abzustützende Abstützvorrichtung (334) aufweist.

23. Thermostatventil nach einem der Ansprüche 1 bis 22,
**dadurch gekennzeichnet,**
daß das Betätigungselement (18) ein Ventilverschlußglied (21), z. B. einen Ventilteller, für ein Kühlerventil (11) und ferner ein zweites Ventilverschlußglied (24), z. B. einen Ventilteller, für ein Bypaßventil (12) trägt, dem im Einbaugehäuse (15; 115) eine koaxiale Öffnung (13) mit vorzugsweise stirnseitiger Ventilsitzfläche (28) zugeordnet ist.

24. Thermostatventil nach einem der Ansprüche 1 bis 22,
**dadurch gekennzeichnet,**
daß das Betätigungselement (218; 318) lediglich das dem Kühlerventil (211; 311) zugeordnete Ventilverschlußglied (221; 321) trägt und daß mindestens eine Fläche (255; 357), z. B. bodenseitige Fläche, im Einbaugehäuse (215; 315) als Abstützfläche für die Abstützvorrichtung (234; 334) bei eingebautem Thermostatventil ausgebildet ist.

25. Thermostatventil nach einem der Ansprüche 1 bis 24,
**dadurch gekennzeichnet,**
daß das Betätigungselement (18; 218; 318) im Gehäuse (19; 119; 219; 319) einen Dehnstoff enthält, der sich bei Erwärmung ausdehnt und einen Kolben (20) relativ zum Gehäuse (19; 119; 219; 319) verschiebt.

26. Thermostatventil nach Anspruch 25,
**dadurch gekennzeichnet,**
daß der Kolben (20) an einem am Bauteil (30; 130; 230; 330) befindlichen Widerlager (33) axial abgestützt ist.

## Claims

1. A thermostatic valve for controlling the temperature of the coolant of an internal combustion engine, particularly of a motor vehicle engine, which regulates the flow of coolant from the internal combustion engine through a bypass and/or through a heat exchanger, particularly a cooler, back to the internal combustion engine, with a temperature-dependently operating actuating element (18), of which the housing (19) carries at least one valve closure member (21) and, upon being heated, produces a travel of the valve closure member (21) against a restoring spring (23) which, in the opening direction of the valve closure member (21), has one end biassed on a bracing device (34), whereby the valve seat (31) associated with the valve closure member (21) is constructed on a component (30) which comprises supporting surfaces (35) associated with the bracing device (34), characterised in that prior to the thermostatic valve being fitted into a housing (15; 115; 215; 315) those surfaces (36; 136; 236; 336) of the bracing device (34; 134; 234; 334) which are associated with the supporting surfaces (35; 135; 235; 335) of the component (30; 130; 230; 330) bear on the supporting surfaces (35; 135; 235; 335) and in that in the condition where the thermostatic valve is fitted into the housing (15; 115; 215; 315), the supporting surfaces (35; 135; 235; 335) of the component (30; 130; 230; 330) are relieved by the bracing device (34; 134; 234; 334) while the bracing device (34; 134; 234; 334) is supported on the housing (15; 115; 215; 315).

2. A thermostatic valve according to Claim 1, characterised in that the bracing device (34; 134; 234; 334) comprises a bracing member (37; 137; 237; 337) on the housing (19; 119; 219; 319) of the actuating element (18; 218; 318) adapted to have end portions (38, 39) braced on the supporting surfaces (35; 135; 235; 335) of the component (30; 130; 230; 330) and lifted off the supporting surfaces (35; 135; 235; 335) in the installed state of the thermostatic valve.

3. A thermostatic valve according to Claim 2, characterised in that the bracing member (37; 137; 237; 337) is displaceable in relation to the housing (19; 119; 219; 319) of the actuating element (18; 218; 318) and has on one side a bearing surface (40) for the associated end of the restoring spring (23; 223; 323) and on the side of the end portions (38, 39) remote from the restoring spring (23; 223; 323) has surfaces (36; 136; 236; 336) associated with the supporting surfaces (35; 135; 235; 335) and, in the installed state, can be lifted off the supporting surfaces (35; 135; 235; 335) against the action of the restoring spring (23; 223; 323).

4. A thermostatic valve according to one of Claims 1 to 3, characterised in that the component (30; 130; 230; 330) has at least two projecting arms (41, 42; 241, 242; 341, 342) substantially parallel with the actuating element (18; 218; 318) and which carry the supporting surfaces (35; 135; 235; 335).

5. A thermostatic valve according to Claim 4, characterised in that the arms (41, 42; 241, 242; 341, 342) carry at the end inwardly directed projections (43, 44) on the upwardly directed side of which the supporting surfaces (35; 135; 235; 335) are provided.

6. A thermostatic valve according to one of Claims 1 to 5, characterised in that the component (30; 130; 230; 330) is constructed from synthetic plastics material.

7. A thermostatic valve according to one of Claims 1 to 6, characterised in that the bracing member (37; 137; 237; 337) is of substantially bridge-like construction.

8. A thermostatic valve according to one of Claims 1 to 7, characterised in that the bracing member (37; 137; 237; 337) has at least two arms directed away from each other and which can via their ends supported on or lifted off the supporting surfaces (35; 135; 235; 335) of the component (30; 130; 230; 330).

9. A thermostatic valve according to one of Claims 1 to 8, characterised in that in the installed condition of the thermostatic valve, the surfaces (356) of the bracing device (334) which are provided on the bracing member (337) itself are biassed on surfaces (357) or at least one bracing member (358) of the housing (315).

10. A thermostatic valve according to one of Claims 1 to 8, characterised in that in the installed state of the thermostatic valve, the bracing device (34; 134; 234) has one particular supporting part (45; 145; 245; 358) supported on the housing (15; 115; 215).

11. A thermostatic valve according to Claim 10, characterised in that the particular supporting part (45; 145; 245) is disposed under the bracing member (37; 137; 237) on the housing (19; 119; 219) of the actuating element (18; 218).

12. A thermostatic valve according to Claim 10 or 11, characterised in that the particular supporting member (45; 145) of the bracing device (34; 134) is connected to or integral with the bracing member (37; 137).

13. A thermostatic valve according to one of Claims 10 to 12, characterised in that the particular supporting member (245) is constructed as an independent component.

14. A thermostatic valve according to Claim 13, characterised in that the particular supporting member (245) is captively supported on the housing (219) of the actuating element (218) for example by means of at least one projection (254), annular bead or the like.

15. A thermostatic valve according to one of Claims 10 to 14, characterised in that the particular supporting part (45; 245) comprises one or a plurality of bracing members (46, 47; 252) which project away from the supporting member (45; 245) in a direction remote from the housing (19; 219) of the actuating element (18; 218) and which can have their ends axially braced on the housing (15; 215).

16. A thermostatic valve according to Claim 15, characterised in that the bracing members (46, 47; 252) consist of downwardly bracing arms.

17. A thermostatic valve according to Claim 15 or 16, characterised in that the at least one bracing member (252) is constructed as a substantially cylindrical sleeve (253).

18. A thermostatic valve according to Claim 17, characterised in that the sleeve (253) contains in its walls apertures, preferably such as are open at least on one axial side.

19. A thermostatic valve according to one of Claims 10 to 15, characterised in that the particular supporting part (145) comprises one or a plurality of bracing members (146, 147) extending in one common substantially horizontal plane and
which have their outer ends (148, 149) adapted to be braced on at least one projection (151), e.g. an annular shoulder, a step or the like on the housing (115).

20. A thermostatic valve according to Claim 19, characterised in that the at least one bracing member (146) is constructed as a plane disc.

21. A thermostatic valve according to Claim 20, characterised in that the disc has apertures.

22. A thermostatic valve according to Claim 10, characterised in that the particular supporting part of the bracing device (334) is constructed as a part (bracing member 358) of the housing (315) or as an attachment which can be fitted on the housing (315) and which has surfaces (357) for the bracing device (334) which is to be braced on the housing (315).

23. A thermostatic valve according to one of Claims 1 to 22, characterised in that the actuating element (18) carries a valve closure member (21), e.g. a valve plate, for a cooler valve (11) and furthermore a second valve closure member (24), e.g. a valve plate, for a bypass valve (12), with which, in the housing (15; 115) a coaxial aperture (13) with a valve seating face (28) preferably at its end, is associated.

24. A thermostatic valve according to one of Claims 1 to 22, characterised in that the actuating element (218; 318) only carries the valve closure member (221; 321) associated with the cooler valve (211; 311) and in that at least one surface (255; 357) e.g. bottom surface in the housing (215; 315) is constructed as a bracing surface for the bracing device (234; 334) when the thermostatic valve is installed.

25. A thermostatic valve according to one of Claims 1 to 24, characterised in that the actuating element (18; 218; 318) in the housing (19; 119; 219; 319) contains an expansible substance which expands when warmed and displaces a piston (20) in relation to the housing (19; 119; 219; 319).

26. A thermostatic valve according to Claim 25, characterised in that the piston (20) is axially supported on an abutment (33) disposed on the component (30; 130; 230; 330).

## Revendications

1. Soupape thermostatique destinée à réguler la température du fluide de refroidissement d'un moteur à combustion interne, en particulier un moteur d'automobile, laquelle soupape thermostatique régule le flux du fluide de refroidissement qui circule à partir du moteur à combustion interne en passant par une dérivation et/ou un échangeur thermique, en particulier, un radiateur de refroidissement, et retourne dans le moteur à combustion interne, et comprend un élément de manoeuvre (18) qui est actionné en fonction de la température, dont le boîtier (19) porte au moins un organe de fermeture (21) de la soupape et provoque en cas d'augmentation de la température le déplacement de l'organe de fermeture (21) contre un ressort de rappel (23), dont une extrémité orientée vers l'ouverture de l'organe de fermeture (21) s'appuie contre un dispositif d'appui (34), le siège de soupape (31) coordonné à l'organe de fermeture (21) étant formé sur une pièce détachée (30) qui est pourvue des surfaces d'appui (35) coordonnées au dispositif d'appui (34), caractérisée en ce que, avant le montage de la soupape thermostatique dans un boîtier de montage (15 ; 115 ; 215 ; 315), le dispositif d'appui (34 ; 134 ; 234 ; 334) vient en appui avec des surfaces (36 ; 136 ; 236 ; 336) coordonnées aux surfaces de support (35 ; 135 ; 235 ; 335) de la pièce détachée (30 ; 130 ; 230 ; 330) contre les surfaces de support (35 ; 135 ; 235 ; 335) et en ce que, lorsque la soupape thermostatique est montée dans le boîtier de montage (15 ; 115 ; 215 ; 315), les surfaces de support (35 ; 135 ; 235 ; 335) de la pièce détachée (30 ; 130 ; 230 ; 330) ne supportent plus le dispositif d'appui (34 ; 134 ; 234 ; 334) et le dispositif d'appui (34 ; 134 ; 234 ; 334) vient en appui contre le boîtier de montage (15 ; 115 ; 215 ; 315).

2. Soupape thermostatique selon la revendication 1, caractérisée en ce que le dispositif d'appui (34 ; 134 ; 234 ; 334) comporte un organe d'appui (37 ; 137 ; 237 ; 337) réalisé sur le boîtier (19 ; 119 ; 219 ; 319) de l'élément de manoeuvre (18 ; 218 ; 318), qui peut s'appuyer avec des extrémités (38, 39) contre les surfaces de support (35 ; 135 ; 235 ; 335) de la pièce détachée (30 ; 130 ; 230 ; 330) et qui, à l'état monté de la soupape thermostatique, peuvent se détacher des surfaces d'appui (35 ; 135 ; 235 ; 335).

3. Soupape thermostatique selon la revendication 2, caractérisée en ce que l'organe d'appui (37 ; 137 ; 237 ; 337) peut se déplacer par rapport au boîtier (19 ; 119 ; 219 ; 319) de l'élément de manoeuvre (18 ; 218 ; 318) et comporte sur un côté une surface de contact (40) destinée à l'extrémité correspondante du ressort de rappel (23 ; 223 ; 323) et comporte sur le côté des extrémités (38, 39), opposé au ressort de rappel (23 ; 223 ; 323), les surfaces (36 ; 136 ; 236 ; 336) coordonnées aux surfaces de support (35 ; 135 ; 235 ; 335) et, à l'état monté, peut se détacher des surfaces de support (35 ; 135 ; 235 ; 335) à l'encontre de l'action du ressort de rappel (23 ; 223 ; 323).

4. Soupape thermostatique selon l'une quelconque des revendications 1 à 3, caractérisée en ce que la pièce détachée (30 ; 130 ; 230 ; 330) comporte au moins deux branches (41, 42 ; 241, 242 ; 341, 342) en saillie, pratiquement parallèles à l'élément de manoeuvre (18 ; 218 ; 318), lesquelles branches portent les surfaces de support (35 ; 135 ; 235 ; 335).

5. Soupape thermostatique selon la revendication 4, caractérisée en ce que les branches (41, 42 ; 241, 242 ; 341, 342) portent des saillies (43, 44) aux extrémités orientées vers l'intérieur, sur le côté orienté vers le haut desquelles sont prévues des surfaces de support (35 ; 135 ; 235 ; 335).

6. Soupape thermostatique selon l'une quelconque des revendications 1 à 5, caractérisée en ce que la pièce détachée (30 ; 130 ; 230 ; 330) est réalisée en matière synthétique.

7. Soupape thermostatique selon l'une quelconque des revendications 1 à 6, caractérisée en ce que l'organe de support (37 ; 137 ; 237 ; 337) est conçu pratiquement en forme de pont.

8. Soupape thermostatique selon l'une quelconque des revendications 1 à 7, caractérisée en ce que l'organe de support (37 ; 137 ; 237 ; 337) comporte au moins deux bras s'écartant l'un de l'autre, dont les extrémités peuvent s'appuyer contre les surfaces de support (35 ; 135 ; 235 ; 335) de la pièce détachée (30 ; 130 ; 230 ; 330) ou s'en écarter.

9. Soupape thermostatique selon l'une quelconque des revendications 1 à 8, caractérisée en ce que le dispositif d'appui (334), à l'état monté de la soupape thermostatique, s'appuie avec des surfaces (356) prévues sur l'organe de support (337) lui-même contre des surfaces (357) ou au moins un organe d'appui (358) du boîtier de montage (315).

10. Soupape thermostatique selon l'une quelconque des revendications 1 à 8, caractérisée en ce que le dispositif d'appui (34 ; 134 ; 234), à l'état monté de la soupape thermostatique, s'appuie avec une pièce de support (45 ; 145 ; 245 ; 358) particulière contre le boîtier de montage (15 ; 115 ; 215 ; 315).

11. Soupape thermostatique selon la revendication 10, caractérisée en ce que la pièce de support (45 ; 145 ; 245) est disposée en dessous de l'organe d'appui (37 ; 137 ; 237) sur le boîtier (19 ; 119 ; 219) de l'élément de manoeuvre (18 ; 218).

12. Soupape thermostatique selon la revendication 10 ou 11, caractérisée en ce que la pièce de support (45 ; 145) particulière du dispositif d'appui (34 ; 134 ) est assemblée avec l'organe d'appui (37 ; 137) de ce dernier ou réalisée d'une seule pièce avec ce dernier.

13. Soupape thermostatique selon l'une quelconque des revendications 10 à 12, caractérisée en ce que la pièce de support (245) particulière est conçue comme une pièce détachée indépendante.

14. Soupape thermostatique selon la revendication 13, caractérisée en ce que la pièce de support (245) particulière est maintenue de manière à ne pas être perdue, par exemple à l'aide d'au moins une saillie (254), un bourrelet annulaire ou un élément analogue, contre le boîtier (219) de l'élément de manoeuvre (218).

15. Soupape thermostatique selon l'une quelconque des revendications 10 à 14, caractérisée en ce que la pièce de support (45 ; 245) particulière comporte un ou plusieurs organes de support (46, 47 ; 252), qui s'avancent en saillie dans le boîtier (19 ; 219) de l'élément de manoeuvre (18 ; 218) dans le sens opposé à la pièce de support (45 ; 245) et peuvent s'appuyer axialement par leurs extrémités contre le boîtier de montage (15 ; 215).

16. Soupape thermostatique selon la revendication 15, caractérisée en ce que les organes de support (46, 47 ; 252) sont formés par des bras qui s'écartent vers le bas.

17. Soupape thermostatique selon la revendication 15 ou 16, caractérisée en ce qu'au moins un organe de support (252) est conçu en forme de gaine (253) pratiquement cylindrique.

18. Soupape thermostatique selon la revendication 17, caractérisée en ce que les parois de la gaine (253) contiennent des orifices, de préférence des orifices ouverts vers un côté axial.

19. Soupape thermostatique selon l'une quelconque des revendications 10 à 15, caractérisée en ce que la pièce de support (145) particulière comporte un ou plusieurs organes de support (146, 147) qui s'étendent dans le même plan horizontal et dont l'extrémité extérieure (148, 149) peut s'appuyer contre au moins une saillie (151), telle qu'un bourrelet annulaire, un décrochement ou un élément analogue, réalisée sur le boîtier de montage (115).

20. Soupape thermostatique selon la revendication 19, caractérisée en ce qu'au moins un organe de support (146) est conçu en forme de disque plan.

21. Soupape thermostatique selon la revendication 20, caractérisée en ce que le disque contient des orifices.

22. Soupape thermostatique selon la revendication 10, caractérisée en ce que la pièce de support particulière du dispositif d'appui (334) est conçue comme une partie (organe d'appui 358) du boîtier de montage (315) ou comme une pièce complémentaire, qui peut être montée sur le boîtier de montage (315) et comporte des surfaces (357) destinées au dispositif d'appui (334) qui s'appuie contre le boîtier de montage (315).

23. Soupape thermostatique selon l'une quelconque des revendications 1 à 22, caractérisée en ce que l'élément de manoeuvre (18) porte un organe de fermeture de la soupape (21), tel qu'une tête de soupape, pour une soupape de radiateur de refroidissement (24), et en outre un deuxième organe de fermeture de la soupape (24), tel qu'une tête de soupape, pour une soupape de dérivation (12), lequel organe de fermeture est cordonné dans le boîtier de montage (15 ; 115) à un orifice coaxial (13) avec de préférence une surface frontale pour siège de soupape (28).

24. Soupape thermostatique selon l'une quelconque des revendications 1 à 22, caractérisée en ce que l'élément de manoeuvre (218 ; 318) porte seulement l'organe de fermeture de la soupape (221 ; 321), coordonné à la soupape du radiateur de refroidissement (211 ; 311), et en ce qu'au moins une surface (255; 357), telle une surface du côté du fond, est conçue comme une surface d'appui réservée au dispositif d'appui (234 ; 334) dans le boîtier de montage (215 ; 315), lorsque la soupape thermostatique est montée.

25. Soupape thermostatique selon l'une quelconque des revendications 1 à 24, caractérisée en ce que l'élément de manoeuvre (18 ; 218 ; 318) dans le boîtier (19 ; 119 ; 219 ; 319) contient une matière de dilatation, qui se dilate sous l'effet d'une augmentation de température et déplace un piston (20) par rapport au boîtier (19 ; 119 ; 219 ; 319).

26. Soupape thermostatique selon la revendication 25, caractérisée en ce que le piston (20) s'appuie axialement contre un contre-appui (33) réalisé contre la pièce détachée (30 ; 130 ; 230 ; 330).
